# EUROPEAN PATENT APPLICATION

(11) **EP 2 194 713 A2**
(43) Date of publication of application: **09.06.2010**
(21) Application number: 09006041.9
(22) Date of filing: 18.05.2000
(51) Int. Cl.: H04N 5/907

(54) **Video playback apparatus**

(30) Priority: 24.05.1999 US 317427
(62) Divisional of application: 00304210.8
(71) Applicant: Digital View Ltd., Kowloon, Hong Kong (CN)
(72) Inventor: Henry, James Robert William, Causeway Bay Hong Kong (CN); Ma, Calvin Chun Sang, New Territ Hong Kong (CN)
(74) Representative: Reeve, Anna Elizabeth

(57) **Abstract**

Video playback apparatus includes a solid state digital memory means for storing the video data. This has a number of advantages including small size, an absence of moving parts, and the fact that the memory can be rapidly re-written if it is required to change the video data. Since the video data is in a digital format it can be more easily processed and edited and may have within it embedded instructions for the manner in which the data is played back. Preferably the apparatus may also have means for connecting to a remote computer, either directly or via the Internet, whereby the contents of the memory means can be updated from a remote location.

## Description

### FIELD OF THE INVENTION

This invention relates to video playback apparatus, and in particular to video playback apparatus that displays video stored in a solid state digital memory means.

### BACKGROUND OF THE INVENTION

Conventional forms of video playback include means for playing a video stored on a pre-recorded format. Well-known examples of such conventional video formats include video cassette recorders (VCR) and video compact discs (VCD). While these prior technologies have proven very popular and successful, they are not without their drawbacks.

A first problem is one of size. Video cassettes in particular are relatively large and cumbersome. This size increases the required size of any playback apparatus and also causes storage problems. Video tapes deteriorate after repeated use and must be rewound after use. Video compact discs are smaller than cassettes, and thus go some way to solving this problem, but by no means do they do so completely. Both tapes and video compact discs have long seek times when jumping from location to location which reduces the potential for interactivity. Existing devices also require a number of moving parts and video compact discs in particular are vulnerable to vibration and physical shock.

A further problem is that generally speaking once a video programme has been recorded it is fixed and is not easy to change. While video cassettes can be re-recorded over, to do so is a laborious and time-consuming job. Often each cassette must be recorded in real-time, or if a faster recording time is required special facilities are necessary. Re-recording a video compact disc is not possible at all and if the video content is to be changed, a new disc is required.

This relatively fixed nature of the video content means that existing systems are very inflexible. They are perfectly suitable for viewing material that it is not needed to change, for example a movie, but they are not suitable for showing material that needs regular up-dating such as advertising and information programming. They are also not very suitable for applications that require user interactivity.

### SUMMARY OF THE INVENTION

According to the present invention there is provided video playback apparatus comprising; solid state memory means for storing video data as digital memory files, control means for controlling the output of said memory means, means for converting the output of said memory means to a video signal, and video output means for outputting said video signal to display means for displaying said video signal as a video image.

Storing the video data in solid state memory means has a number of advantages. Firstly, a variety of solid state memory devices are available (for example so-called "Compact Flash" memory units) that are substantially smaller than previously existing video media. If it is desired to change the video display, one memory unit can be simply interchanged for another. Alternatively the contents of the memory means can be very rapidly re-written when it is desired to change or update the contents.

However, more preferably still, the apparatus may comprise means for writing to the memory means from a remote location. This possibility takes advantage of the fact that the video data is stored as a digital file and allows the contents of the memory to be changed without physically having to change the memory means. Furthermore the memory means of a number of apparatus at different locations, for example within a shopping complex or an office block, can be changed from a single central location. In addition the remote location may be able to inspect the current display status of the apparatus. This remote writing to the memory means may be accomplished through the Internet or through a direct connection to a remote computer. Another possibility is that if the display means is provided with means for allowing viewer interactivity, for example a touch sensitive screen, the direct connection may allow viewer inputs to be transmitted back to the remote computer.

The control means may include a default playback mode, for example this may be to cause the video data to be played as a continuous cycle. However, in one embodiment of the invention the video data itself may include embedded video control data that tells the control means how to play the video data. For example, the video data may include a number of files relating to a number of different video programmes and the video control data may indicate the order and relative frequency with which the video programmes are played.

To make maximum use of the memory capacity the video data is preferably compressed (for example using MPEG-1 or MPEG-2 formats) and the converting means comprises a decoder and at least one interface to a video display means. Preferably there are provided separate interfaces to a number of different possible video display means. For example a liquid crystal display, a computer VGA monitor, or a television screen.

Since the video data is stored as a digital file the present invention allows for the possibility of adding further materials to the data or processing the data in any desired way before it is displayed. In one embodiment for example the apparatus may include on screen display control means for adding an on screen display, for example a text message, to the video output signal. Preferably the video data file may also include embedded instructions, for example on the manner of playback. Such instructions may, for example, include, scheduling instructions or instructions for data logging where the video includes a user interactive feature.

Preferably means may be provided for adding additional memory capacity to the apparatus to increase the amount of video data that can be stored and thus re-played.

Viewed from another broad aspect the present invention provides video playback apparatus comprising, memory means for storing video data as digital memory files, control means for controlling the output of said memory means, means for converting the output of said memory means to a video signal, video output means for outputting said video signal to display means for displaying said video signal as a video image, and means for connecting said apparatus to a remote location whereby the contents of said files may be changed from said remote location.

Viewed from yet another broad aspect the present invention provides video playback apparatus comprising, memory means storing video data as digital memory files, said files including embedding playback instruction data control means for controlling the output of said memory means, means for converting the output of said memory means to a video signal, and video output means for outputting said video signal to display means for displaying said video signal as a video image, wherein said control means is responsive to the embedded playback instruction data

Preferably the video playback apparatus comprises a default playback mode for use in the absence of such embedded instructions.

An example of possible playback instructions that may be included in the video data file is scheduling instructions. Another possibility is instructions for controlling user interactivity.

### BRIEF DESCRIPTION OF THE DRAWINGS

Some embodiments of the invention will now be described by way of example and with reference to the accompanying drawings, in which:-
Fig.1 is a block diagram of video apparatus according to a first embodiment of the invention,
Fig.2 is a block diagram of video apparatus according to a second embodiment of the invention,
Fig.3 is a block diagram of video apparatus according to a third embodiment of the invention,
Fig.4 illustrates a possible structure of a video data file,
Fig.5 illustrates the contents of the master header of the data file of Fig.4, and
Fuig.6 illustrates the contents of the track object headers of the data file of Fig.4

### DETAILED DESCRIPTION OF PREFERRED EMBODIMENTS

In the following description it should be noted that the term "video" is intended to include the possibility of video and audio, and also includes the possibility of still video images in addition to moving images. The term "video" should also be taken to include the possibility of text-based images.

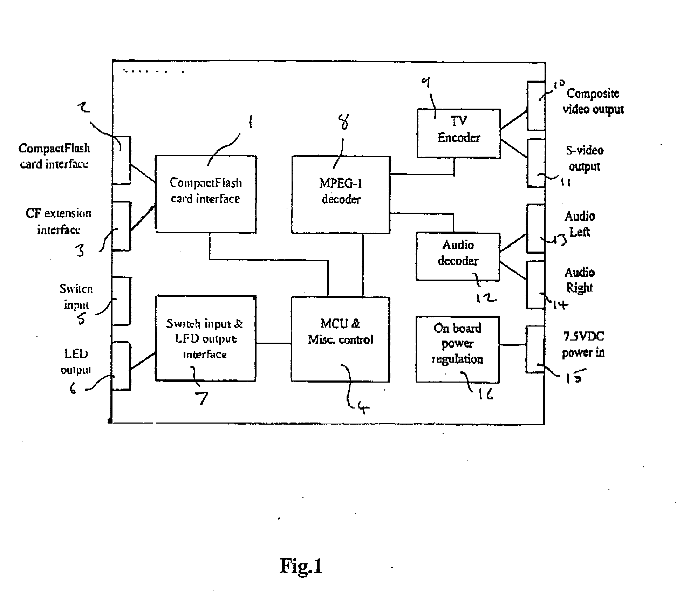

Fig.1 is a block diagram of a first embodiment of the invention. This embodiment of the invention takes the form of a printed circuit board card having a number of components as will be described in the following. Firstly the apparatus comprises a solid state digital memory means 1 for storing the video data in the form of one or more video files. The memory means may take various forms, for example may be memory chips formed in the card, but is preferably an interface for receiving a solid state digital memory device such as a "compact flash" memory device. To enhance the memory capacity of the card, a second compact flash card interface 2 may be provided for receiving a further memory device, and a compact flash extension interface 3 may also be provided such that the compact flash memory device may be located physically remote from the remainder of the playback apparatus and connected thereto by a cable to the extension interface 3. This possibility of a remote location for the memory device may be desirable where the playback apparatus is to be located in a position where access is difficult and it may be desired to locate the memory device in a more convenient location so that it may be changed.

The card is controlled by a controller 4. Controller 4 may include a clock within it to allow scheduling control as will be discussed below. Also provided is a switch input 5 for operation of the card, and an LED output 6 for showing the operational status of the card, both under control of a switch input and LED output interface unit 7. Switches may, for example, be provided to control functions such as volume, brightness and colour, and may also be used to select from different tracks stored in the memory means 1. Switch inputs may also be provided to cause playback to start, stop, pause and re-start, and also functions such as repeat, next track, random track and track select as may be desired. It will be understood that such switches may be physical switches, or may be a remote control unit of any conventional form, or may be areas on a touch screen display. Also, the switches on buttons may have different functions in different operating modes, for example "button down" and "button up" positions could correspond to different functions as may be desired. It will be understood that there is a high degree of flexibility in how the apparatus is to be controlled depending on the desired application.

A decoder 8 serves to decode a video output from the memory means 1 and forward the output to a TV encoder 9 which generates a composite video output 10 and a S-video output 11. Decoder 8 also sends an audio signal to an audio decoder 12 which outputs audio left 13 and right 14 channels. The card is also provided with a power input 15 and an on-board power regulation unit 16. It will be understood that the card may be incorporated as part of a video playback apparatus with any form of video display, eg a television monitor.

The video data may be compressed and stored in any desired format such as MPEG-1, or MPEG-2 or any other desired compression method. The original source of the video data may be chosen from a number of varied options. For example the video data could be computer generated in which case it will already be in a digital format whereby it need only be converted into a suitable format (eg AVI) for editing, then compression (eg to MPEG-1) and then transferred to the memory means 1. Alternatively the original video source may be non-digital (eg VCR) in which case the video data must first be converted into a digital format before the above processing.

In preparing the video data for playback from the apparatus of the present invention, it may be provided with any additional required information. For example, the controller is preferably provided with a default playback mode (for example the controller can be instructed to play in a continuous mode in which the video data is played repeatedly in a continuous cycle), however the video data files transferred to the memory means 1 may be provided with a header including video playback instructions that over-ride the default playback mode. These instructions for how to play the video data may therefore be embedded within the video data itself.

One possible example of instructions that may be embedded in the data file is scheduling information. For example, the video data file may include a number of tracks that are intended to be shown at different times. If the data file includes, say, four tracks, the instructions may schedule the viewing such that the track shown changes every week. Alternatively tracks may cycle during the day. If, for example, the apparatus of the present invention is used to present advertising material in a shopping mall, different tracks may be played at different times of day depending on the expected likely viewers: office workers in the rush hour, housewives during the day, school-children in late afternoon and so on.

Another possibility is that the video data may be designed with user interactivity in mind. For example, the user may select tracks to be shown from a menu and may signal other choices and preferences. Embedded instructions may be designed to control this interactivity and also to log data such as user responses and preferences. User input in such an embodiment may be achieved by means of switches on the playback apparatus, or by a touch screen of either an analogue or matrix type.

Also stored as embedded instructions in the video data file may be instructions that control another device. For example, it may be desired to change the ambient lighting around the apparatus while a particular video track is being played. Instructions to control the lighting in this manner can be included in the video data file.

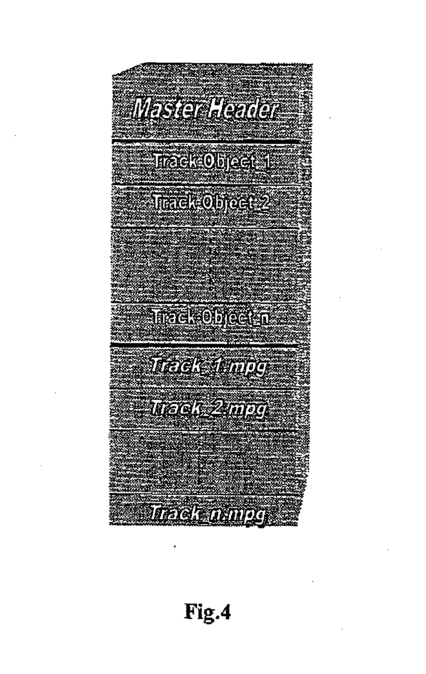

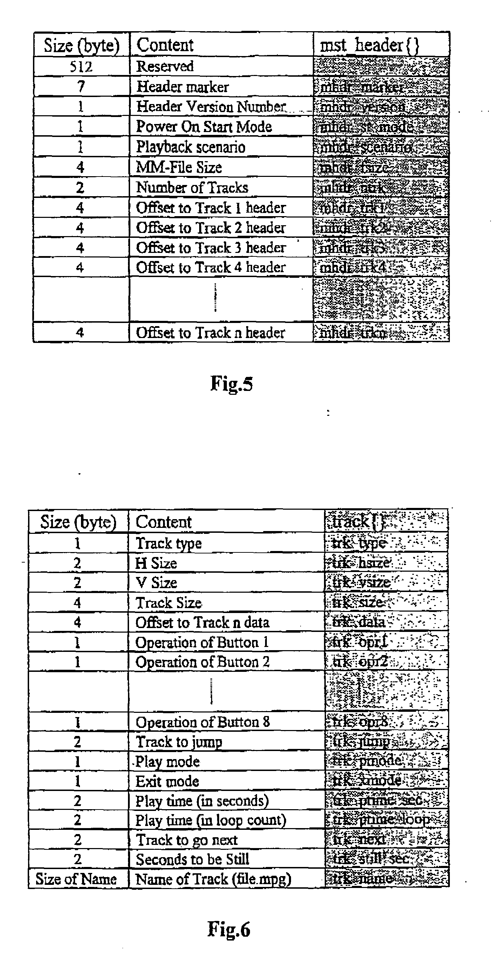

Fig.4 schematically shows the overall structure of a video data file. The file includes a master header, a number of track object headers corresponding to the n video tracks, and the n video tracks themselves. Fig.5 illustrates a possible exemplary structure for the master header. It will be seen that it includes a header marker for header searching, and header version number. Power on start mode may indicate whether the video data is played immediately or only upon receipt of a start command. Playback scenario may control the manner of playback. The header also includes the total file size and the number of tracks.

Fig.6 schematically shows a possible track object header. This includes data on the track type, horizontal and vertical size, the effect of operation of selected switches on the playback, play time and other information.

This embodiment of the present invention has a number of advantages. To begin with the memory means storing the video information is small and compact. As such with current technology it may not have the same capacity as a VCR tape or a video compact disc, but for many applications (eg short promotional videos, music videos, advertising or informational videos) large memory capacity is not critical. When it is desired to change the video programming, the memory means may be removed and either replaced with another memory means storing new video data, or the video data on the existing memory means may be simply re-written. Since the video data is stored in solid state memory in a digital format, this re-writing can be done very rapidly.

In addition to storing video payback data and the data logged from a user interactive operation, the data file may also be used to store a user's desired playback settings, for example relating to volume or brightness controls. The apparatus may have default settings for such controls, but if a user prefers different settings this information can be recorded to the data file and will in future override the default setting.

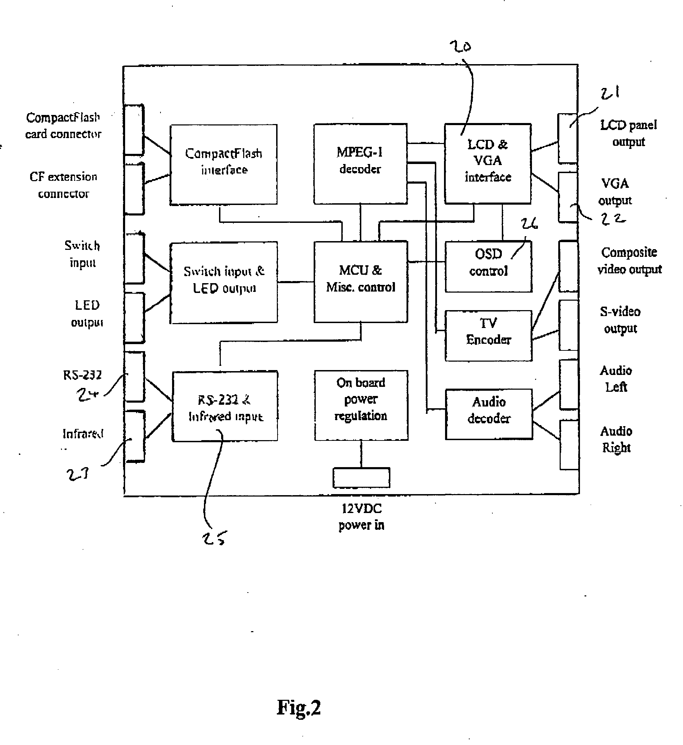

Fig.2 shows a second embodiment of the invention. The embodiment of Fig.2 takes the same basic form as that of Fig.1 but with certain additional features. Therefore those features that are common to the two embodiments will not be described again. The embodiment of Fig.2 is provided with means for supporting video display on a flat panel display unit such as an LCD unit, and also with means for supporting an analog VG display such as a normal computer monitor. These display support functions are provided by display support means 20 that provides a LCD panel output 21 and VGA output 22. The embodiment of Fig.2 also provides remote control features from an infrared input 23 and a radio input 24 which lead to a remote control interface unit 25. Also provided in this second embodiment is an on screen display control unit 26 under the control of the controller and which allows an on screen display, for example a text message, to be added to a video output from the memory means.

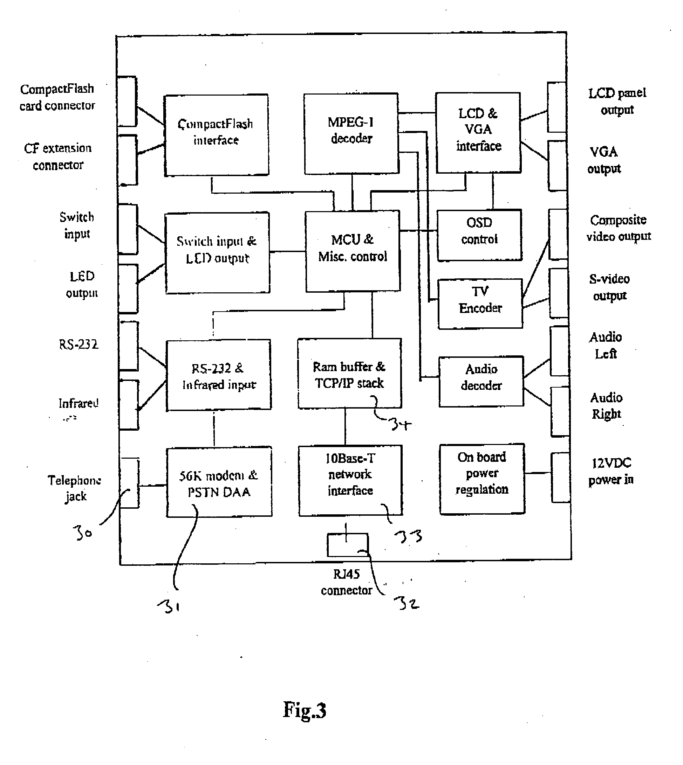

Fig.3 shows a third embodiment of the invention. Again, this third embodiment adds further features to the embodiments of Figs.1 and 2 and therefore common features will not be described again. The important difference between the embodiment of Fig.3 and those of Figs.1 and 2 is that the embodiment of Fig.3 provides means for transferring video data to the memory means 1 without removing the memory means 1 from the card. This means that it is possible to change the video data from a remote source. This may be done by two methods. Firstly a telephone jack 30 is provided with a modem 31 to allow data to be transmitted through a standard telephone line to the memory means 1. In this possibility the playback apparatus effectively functions as a very small website. In addition the embodiment of Fig.3 is also provided with a connector 32, an interface 33 and RAM buffer and TCP/IP stack chip 34 to allow the card to be connected through a network to the Internet. This allows not only new video data to be transferred to the memory means 1, but also the current status of the device may be checked remotely. In addition, if the video data has options for user interaction, eg through a touch sensitive screen, this data may be transmitted from the card to an external location. Alternatively, or in addition, data may be downloaded from the playback apparatus by any convenient means such as an infra-red data acquisition means.

The direct connection to a remote computer may also be used to provide a source of live video. A video signal from an external source may be transmitted to the video playback apparatus of the present embodiment in real time as a digital signal either via the Internet or via a direct connection. In such a possible arrangement the memory means may serve as an emergency default in the event that the live video signal is lost for any reason. If the live signal is not received by the apparatus of this embodiment, then a previously recorded video stored in the memory means may be played in its place.

Where, as discussed above, the video data file includes embedded playback instructions (for example for scheduling or data logging purposes) these instructions can be changed from a remote source through such a direct connection.

Another possibility of this embodiment of the invention is that the memory means 1 may comprise only a video track playlist which is presented to a user. A user may use an interactive means such as a touch screen to select a track from the playlist. The video data file corresponding to this track is then requested by the apparatus from a remote source library which transmits the video data file to the apparatus for playback. The playlist is stored locally in the apparatus but may be updated from the remote source library depending on the contents of that library.

The video playback apparatus of the present invention has a number of important advantages over the prior art. As discussed above the apparatus is small and therefore very space-efficient. The cost is relatively low, and since there are no moving parts the reliability of the device is much higher than conventional playback apparatus. The device is easy to use and is also highly versatile. Since the video data is stored in a digital video file it can be easily manipulated and rapidly re-written. It is also possible to change the video data content, and to more generally control the playback apparatus, from a remote location. This would enable a number of video display apparatus to be updated with new video data from a single source. The manner in which the video data is played can be pre-programed into the controller (eg an always play function) or can be embedded within the video data itself which may then over-ride any previously supplied instructions.

## Claims

1. Video playback apparatus comprising:
solid state memory means for storing video data as digital memory files,
control means for controlling the output of said memory means,
means for converting the output of said memory means to a video signal, and
video output means for outputting said video signal to display means for displaying said video signal as a video image.

2. Video playback apparatus as claimed in claim 1 further comprising means for writing to said memory means from a remote location.

3. Video playback- apparatus as claimed in claim 2 wherein said apparatus includes means for connecting to the Internet and said remote writing is carried out through said Internet connection.

4. Video playback apparatus as claimed in claim 2 wherein said apparatus includes means for connecting to a remote computer and said remote writing is carried out through said remote computer.

5. Video playback apparatus as claimed in claim 1 wherein said control means includes a default video display mode.

6. Video playback apparatus as claimed in claim 5 wherein said default mode is a continuous play mode.

7. Video playback apparatus as claimed in claim 1 video control instructions are embedded in said video data.

8. Video playback apparatus as claimed III claim 7 wherein said video control instructions comprise scheduling instructions.

9. Video playback apparatus as claimed in claim 7 wherein said video control instructions comprise user interaction control instructions.

10. Video playback apparatus as claimed in claim 1 wherein instructions for controlling the operation of another device are included in the video data.

11. Video playback apparatus as claimed in claim 1 wherein said video data is compressed and converting means comprises a decoder and at least one interface to a video display means.

12. Video playback apparatus as claimed in claim 11 wherein said apparatus includes a plurality of interfaces to different display means.

13. Video playback apparatus as claimed in claim 12 wherein interfaces are provided for a liquid crystal display, a VGA monitor, and a television monitor.

14. Video playback apparatus as claimed in claim 1 further comprising on screen display control means for adding an on screen display to a video output signal.

15. Video playback apparatus as claimed in claim 1 further comprising means for adding additional memory means.

16. Video playback apparatus as claimed in claim 1 wherein said video display means comprises means for permitting user interactivity.

17. Video playback apparatus as claimed in claim 16 wherein said apparatus comprises means for logging choices made by a user.

18. Video playback apparatus as claimed in claim 17 including means for downloading to a remote location data logged by said apparatus.

19. Video playback apparatus comprising:
memory means for storing video data as digital memory files, control means for controlling the output of said memory means,
means for converting the output of said memory means to a video signal,
video output means for outputting said video signal to display means for displaying said video signal as a video image, and
means for connecting said apparatus to a remote location whereby the contents of said files may be changed from said remote location.

20. Video playback apparatus as claimed in claim 19 wherein said remote location connecting means may be used for downloading data from said playback apparatus.

21. Video playback apparatus comprising:
memory means storing video data as digital memory files, said files including playback instruction data;
control means for controlling the output of said memory means,
means for converting the output of said memory means to a video signal, and
video output means for outputting said video signal to display means for displaying said video signal as a video image, wherein said control means is responsive to the playback instruction data.

22. Video playback apparatus as claimed in claim 21 wherein said apparatus comprises a default playback mode for use in the absence of instructions.

23. Video playback apparatus as claimed III claim 21 wherein said instructions comprise scheduling information.

24. Video playback apparatus as claimed in claim 21 wherein said instructions comprise instructions for controlling another device.

25. Video playback apparatus comprising:
non-volatile solid state memory means (1) for persistently storing video data as digital files,
control means (4) for controlling the output of said memory means (1),
means for converting the output of said memory means to a video signal,
video output means (9) for outputting said video signal to display means for displaying said video signal as a video image, and
means (30, 31, 32) for connecting said playback apparatus to a source of digital video files at a remote location from which source digital video files are transferred to said playback apparatus.

26. Video playback apparatus as claimed in claim 25 wherein said connecting means includes means (32) for connecting to the Internet.

27. Video playback apparatus as claimed in claim 25 wherein said connecting means includes means for connecting to a remote computer.

28. Video playback apparatus as claimed in claim 25 wherein said control means includes a default video display mode.

29. Video playback apparatus as claimed in claim 28 wherein said default mode is a continuous play mode.

30. Video playback apparatus as claimed in claim 25 wherein video control instructions are embedded in said video data.

31. Video playback apparatus as claimed in claim 25 wherein said video control instructions comprise scheduling instructions.

32. Video playback apparatus as claimed in claim 25 wherein said video control instructions comprise user interaction control instructions.

33. Video playback apparatus as claimed in claim 25 wherein said video data is compressed and said converting means comprises a decoder(s) and at least one interface to a video display means.

34. Video playback apparatus as claimed in claim 33 wherein said apparatus includes a plurality of interfaces (10, 11, 21, 22) to different display means.

35. Video playback apparatus as claimed in claim 34 wherein interfaces are provided for a liquid crystal display, a VGA monitor, and a television monitor.

36. Video playback apparatus as claimed in claim 25 further comprising on-screen display control means for adding an on-screen display to a video output signal.

37. Video playback apparatus as claimed in claim 25 further comprising means (2) for adding additional memory means.

38. Video playback apparatus as claimed in claim 25 wherein said video display means comprises means for permitting user interactivity.

39. Video playback apparatus as claimed in claim 38 wherein said apparatus comprises means for logging choices made by a user.

40. Video playback apparatus as claimed in claim 39 including means for downloading to a remote location data logged by said apparatus.

41. Video playback apparatus as claimed in claim 25 wherein said means for connecting said apparatus to a source of digital video files at a remote location permits two-way communication between said source and said apparatus whereby the contents of said memory means may be changed from said remote location and information pertaining to the status of said apparatus and/or user input may be transmitted from said apparatus to said source.

42. Video playback apparatus as claimed in claim 41 wherein said remote location connecting means may be used for downloading data from said playback apparatus.

43. Video playback apparatus comprising,
non-volatile solid state memory means (1) for persistently storing video data as digital files,
control means (4) for controlling the output of said memory means (1),
means for converting the output of said memory means to a video signal,
video output means (9) for outputting said video signal to display means for displaying said video signal as a video image, and
means (30, 31, 32) for connecting said playback apparatus to a source of digital video files at a remote location from which source digital video files are transferred to said playback apparatus, wherein said video control instructions are embedded in said video data and said control means is arranged to control the display of said video image in accordance with said instructions.

44. Video playback apparatus as claimed in claim 43 wherein said connecting means includes means (32) for connecting to the Internet.

45. Video playback apparatus as claimed in claim 43 wherein said connecting means includes means for connecting to a remote computer.

46. Video playback apparatus as claimed in claim 43 wherein said control means includes a default video display mode.

47. Video playback apparatus as claimed in claim 46 wherein said default mode is a continuous play mode.

48. Video playback apparatus as claimed in claim 43 wherein video control instructions comprise playback instruction data.

49. Video playback apparatus as claimed in claim 43 wherein said video control instructions comprise scheduling instructions.

50. Video playback apparatus as claimed in claim 43 wherein said video control instructions comprise user interaction control instructions.

51. Video playback apparatus as claimed in claim 43 wherein said video data is compressed and said converting means comprises a decoder(s) and at least one interface to a video display means.

52. Video playback apparatus as claimed in claim 51 wherein said apparatus includes a plurality of interfaces (10, 11, 21, 22) to different display means.

53. Video playback apparatus as claimed in claim 52 wherein interfaces are provided for a liquid crystal display, a VGA monitor, and a television monitor.

54. Video playback apparatus as claimed in claim 43 further comprising on-screen display control means for adding an on-screen display to a video output signal.

55. Video playback apparatus as claimed in claim 43 further comprising means (2) for adding additional memory means.

56. Video playback apparatus as claimed in claim 43 wherein said video display means comprises means for permitting user interactivity.

57. Video playback apparatus as claimed in claim 56 wherein said apparatus comprises means for logging choices made by a user.

58. Video playback apparatus as claimed in claim 57 including means for downloading to a remote location data logged by said apparatus.

59. Video playback apparatus as claimed in claim 43 wherein said means for connecting said apparatus to a source of digital video files at a remote location permits two-way communication between said source and said apparatus whereby the contents of said memory means may be changed from said remote location and information pertaining to the status of said apparatus and/or user input may be transmitted from said apparatus to said source.

60. Video playback apparatus as claimed in claim 59 wherein said remote location connecting means may be used for downloading data from said playback apparatus.
